# DEMANDE DE BREVET EUROPEEN

(11) **EP 2 642 318 A2**
(43) Date de publication de la demande: **25.09.2013**
(21) Numéro de dépôt: 13159959.9
(22) Date de dépôt: 19.03.2013
(51) Int. Cl.: G01S 19/35, G01S 19/21, G01S 19/36, G01S 19/26

(54) **Procédé et récepteur pour une commutation d'antennes GNSS sur un porteur tournant**

(30) Priorité: 21.03.2012 FR 1200846
(71) Demandeur: SAGEM DEFENSE SECURITE, 75015 Paris (FR)
(72) Inventeur: Bouvet, Denis, 75015 Paris (FR); Chaminadas, Francis, 75015 Paris (FR)
(74) Mandataire: Regimbeau

(57) **Abrégé**

L'invention concerne un récepteur GNSS multi-antennes, comprenant :
- un module radiofréquence (RF1-RFn) associé à chaque antenne (A1-An);
- un canal de traitement numérique (C₁-C_{N}) associé à chaque satellite et à chaque porteuse du signal satellite, comportant :
o un module (1) d'acquisition et de poursuite du signal satellite ;
o des moyens de calcul (6) de la direction du satellite dans le repère de chaque antenne, et
o un estimateur (7) du gain de chaque antenne dans la direction du satellite pour la porteuse considérée,

caractérisé en ce que :
- chaque module radiofréquence (RF1-RFn) mesure la puissance reçue par chaque antenne pour chaque porteuse;
- chaque canal de traitement (C₁-C_{N}) comporte une logique de commutation (3) configurée pour :
o calculer, pour chaque antenne, un pseudo ratio signal à bruit correspondant à la différence entre :
■ le gain estimé de l'antenne dans la direction du satellite pour la porteuse considérée, et
■ la mesure de puissance reçue par l'antenne pour la porteuse considérée.

## Description

### DOMAINE DE L'INVENTION

Le domaine de l'invention est celui de l'acquisition et la poursuite continue des satellites d'un ou plusieurs systèmes GNSS de positionnement par satellites (« Global Navigation Satellite System ») de type GPS, Galileo ou GLONASS embarqués sur un porteur en rotation, de manière à pouvoir calculer une solution de navigation avec l'ensemble des satellites qui apparaissent au-dessus de l'horizon, tout en étant robuste à la présence de signaux de brouillage.

### ARRIERE PLAN DE L'INVENTION

Plusieurs possibilités existent pour assurer la couverture de tout l'espace visible.

Selon une première solution (dont on peut trouver un exemple dans l'article « Antenne ceinture globale pour la localisation, la télémesure et la télécommande de neutralisation sur un missile d'essai en vol », Revue de l'électricité et de l'électronique n°3, mars 2008), on exploite un réseau d'antennes disposées sur la circonférence du porteur et on vient simplement additionner les signaux pour alimenter avec un seul signal RF le récepteur GNSS. S'il n'y a aucun recouvrement des diagrammes de rayonnement de chaque antenne, cette solution est optimale. Dans la réalité, les diagrammes interfèrent entre eux et le diagramme résultant du réseau présente des variations significatives suivant la direction considérée, variations qui peuvent entraîner la perte du signal à poursuivre. En outre, cette solution n'est pas robuste contre le brouillage.

Une seconde solution possible est, à l'image des antennes adaptatives de type CRPA (« Controlled Reception Pattern Antenna »), de combiner les signaux des différentes antennes du porteur en les pondérant de manière à atténuer la puissance des interférences reçues. Cette possibilité a notamment été étudiée dans l'article suivant : Gupta, I.J., Lee, T-H., "Combining Multiple FRPA for AJ Functionality in GPS Receivers," Proceedings of the 23rd International Technical Meeting of The Satellite Division of the Institute of Navigation (ION GNSS 2010), Portland, OR, September 2010, pp. 2500-2507. Toutefois, dès que l'espacement des antennes dépasse la demi-longueur d'onde du signal traité, le diagramme d'antenne résultant présente des annulations dans certaines directions qui peuvent dégrader les capacités d'acquisition et de poursuite du récepteur.

Une troisième solution est de disposer un nombre limité d'antennes sur la circonférence du porteur et de sélectionner en entrée de chaque canal de corrélation l'antenne la plus susceptible de contenir le signal satellite (ou ayant le gain le plus élevé en direction du satellite à poursuivre). Le récepteur utilise sa position estimée et la position des satellites calculée grâce aux almanachs ou aux éphémérides, ainsi que les informations d'attitude du porteur fournies par une centrale inertielle, pour déterminer quelle antenne voit quel satellite. Cette approche est par exemple décrite dans « GPS Continuous Track on a Spinning Vehicle with Multiple Patch Antennas », R. Cantwell et Richard Ventresca, ION GPS 1999, 14-17 septembre 1999, Nashville, TN.

Une quatrième solution, également basée sur un nombre limité d'antennes sur la circonférence du porteur, consiste à combiner les signaux après la corrélation, en donnant un poids maximum au canal ayant le meilleur rapport Signal sur Bruit ou SNR ; cette approche est décrite dans « GPS Signal Tracking on Spinning Vehicles with Antenna Diversity Techniques », Takuji Ebinuma et al., ION GNSS 2009, 22-25 Septembre 2009.

La première solution décrite ci-dessus présente l'inconvénient d'être peu sélective sur l'origine des signaux (ciel / terre) et favorise la réception d'un signal de brouillage émis depuis le sol.

La seconde solution est en théorie la plus performante en termes de tenue au brouillage, mais l'espacement des antennes est tel que l'on observe en réalité une dégradation du rapport signal à bruit des signaux poursuivis.

La troisième solution est relativement simple mais, pour peu que le porteur ait plus de deux antennes, cette solution n'exploite pas de manière optimale le recouvrement des diagrammes d'antenne pour diminuer la sensibilité aux signaux interférents.

La quatrième solution suppose que l'on est déjà en phase de poursuite, et ne permet pas de choisir efficacement la meilleure antenne durant la phase de recherche des signaux satellites. En outre, elle réclame autant de canaux de corrélation qu'il y a d'antennes pour la poursuite d'un seul signal.

### EXPOSÉ DE L'INVENTION

L"invention a pour objectif de proposer une solution qui présente l'une et/ou l'autre des qualités suivantes:
- simple à mettre en oeuvre;
- robuste et réactive au changement d'environnement du brouillage ;
- fonctionnelle quel que soit la distance entre les antennes ;
- tenue au brouillage améliorée par rapport à une solution « simple » basée sur la visibilité des satellites ;
- indépendante des informations disponibles une fois le satellite acquis (et donc en mode poursuite), ce qui implique alors que le SNR réel n'est pas connu. Dès lors la solution pourra être utilisable dès la phase d'acquisition des signaux, avant même qu'ils ne soient poursuivis (et le SNR réel connu).

A cet effet, l'invention propose selon un premier aspect, un procédé d'acquisition de signaux satellites dans un système de positionnement par satellites embarqué sur un porteur en rotation sur la circonférence duquel est agencé un réseau d'antennes, procédé dans lequel pour chaque satellite et pour chaque porteuse du signal satellite, on calcule la direction du satellite dans le repère de chacune des antennes, et on estime le gain de chacune des antennes dans la direction du satellite dans une bande utile centrée sur chaque porteuse,
procédé **caractérisé en ce que** pour chaque bande utile centrée sur une porteuse du signal satellite :
- on mesure la puissance reçue par chacune des antennes ;
- et pour chaque satellite,
   ○ on calcule pour chacune des antennes un pseudo ratio signal à bruit correspondant à la différence entre le gain estimé de l'antenne dans la direction du satellite et la mesure de puissance reçue par l'antenne ;
   ○ on compare les pseudo ratios calculés pour retenir une des antennes pour l'acquisition ou la poursuite du signal satellite.

Certains aspects préférés, mais non limitatifs, de ce procédé sont les suivants :
- on compare le pseudo ratio signal à bruit de l'antenne à gain maximal dans la direction du satellite avec le pseudo ratio signal à bruit calculé pour chacun des autres antennes, dites antennes alternatives.
- on retient une antenne alternative si le pseudo ratio signal à bruit de cette antenne alternative est supérieur au pseudo ratio signal à bruit de l'antenne à gain maximal d'une quantité prédéterminée, et on retient l'antenne à gain maximal dans le cas contraire.
- on exclut de la comparaison des pseudo ratios signal à bruit les antennes disposant d'un gain dans la direction du satellite inférieur à un seuil prédéterminé.

Selon un second aspect, l'invention concerne un récepteur multi-antennes de signaux d'un système de positionnement par satellites destiné à être embarqué sur un porteur en rotation, et configuré pour mettre en oeuvre le procédé selon le premier aspect de l'invention.

### BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels:
- la figure 1 représente un mode de réalisation possible d'un récepteur GNSS conforme à l'invention ;
- la figure 2a représente la disposition de quatre antennes sur la circonférence du porteur
- la figure 2b représente un modèle de gain d'antenne
- les figures 3a et 3b fournissent une comparaison entre le mode de sélection standard où seul le gain d'antenne dans la direction du satellite est pris en compte et le mode de sélection conforme à l'invention en présence d'un brouilleur de faible puissance ;
- les figures 4a et 4b fournissent une comparaison entre le mode de sélection standard où seul le gain d'antenne dans la direction du satellite est pris en compte et le mode de sélection conforme à l'invention en présence d'un brouilleur de puissance moyenne ;
- la figure 5 illustre l'amélioration du ratio signal à bruit pour différentes puissances de brouilleur en fonction de l'orientation satellite-brouilleur.

### DESCRIPTION DETAILLEE DE L'INVENTION

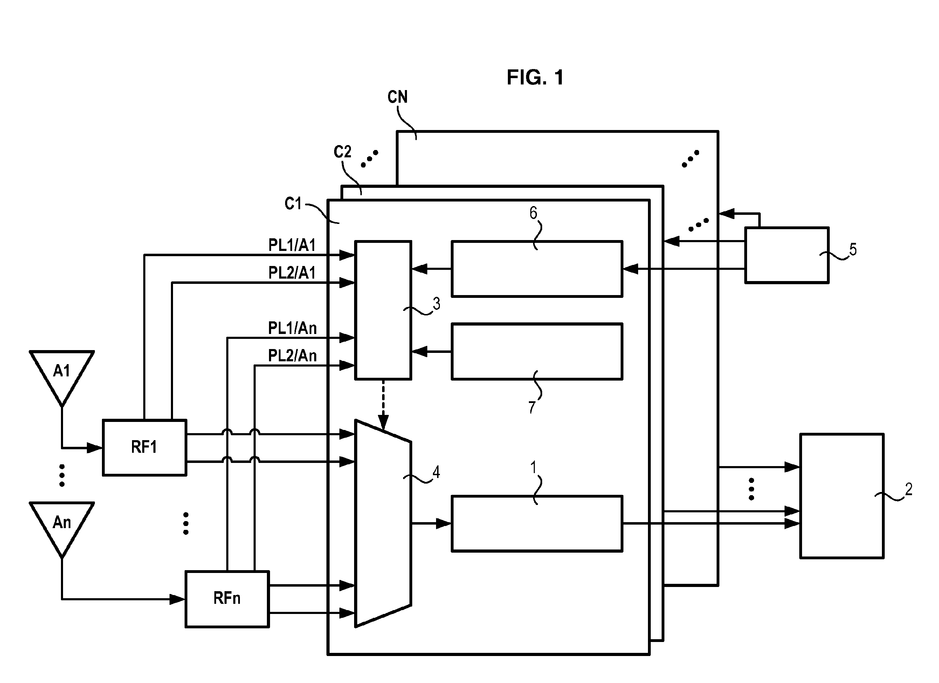

On a représenté sur la figure 1 un récepteur GNSS multi-antennes conforme à un mode de réalisation possible de l'invention destiné à être embarqué au sein d'un porteur, notamment un porteur en rotation, tel qu'un missile par exemple.

Le récepteur GNSS comprend un réseau d'antennes A1-An disposées sur la circonférence du porteur dont les diagrammes de rayonnement se recouvrent au moins partiellement. Un minimum de trois antennes est ainsi requis pour des antennes à couverture hémisphérique. Dans le cadre de l'invention, les diagrammes de rayonnement de chaque antenne sont connus pour les bandes de fréquence utiles (pour une solution à base de GPS seul, cela correspond aux bandes centrées sur les porteuses L1=1575,4 MHz et L2 = 1227,6 MHz).

Un module radiofréquence RF1-RFn est associé à chacune des antennes A1-An et réalise le traitement radiofréquence depuis la séparation des différentes bandes utiles jusqu'à la numérisation des signaux en fréquence intermédiaire sur chacune des bandes. Dans le cadre de l'invention, chaque module radiofréquence RF1-RFn est en outre configuré de manière à fournir une mesure de la puissance reçue P_{L1/A1}, P_{L2/A1} - P_{L1/An}, P_{L2/An} par l'antenne correspondante A1-An dans chacune des bandes utiles (par exemple L1±1MHz et L2±1MHz pour les signaux GPS ouverts C/A et L2C).

La mesure de la puissance des signaux RF dans les bandes GNSS utiles peut être réalisée de différentes manières. On peut notamment citer une mesure directe, par exemple avec un capteur de type détecteur à réponse logarithmique qui, après séparation du signal antenne selon les bandes utiles, évalue la puissance du signal dans la bande considérée. On peut également citer une estimation indirecte, par exemple au travers des commandes automatiques de gain qui régulent la puissance des signaux RF dans chaque bande utile avant numérisation (voir par exemple EP 2 336 800 pour un exemple d'une telle commande automatique de gain).

Le récepteur GNSS comprend par ailleurs N canaux de traitement numériques C₁-C_{N} où chaque canal est associé à un satellite et à une fréquence porteuse, et comprend de manière classiquement connue en soi un module 1 mettant en oeuvre la corrélation GNSS pour acquérir et poursuivre le signal satellite associé. La sortie du module 1 de chacun des canaux C₁-C_{N} est classiquement fournie à un filtre de navigation 2. Le module de corrélation 1 peut être mis en oeuvre par matériel (ASIC, FPGA ou processeur de signal) à une fréquence de plusieurs MHz et les résultats de corrélation sont classiquement traités par logiciel à une fréquence plus basse.

Dans le cadre de l'invention, chacun des canaux de traitement numériques C₁-C_{N} comprend une logique de commutation 3 et un sélectionneur 4 qui reçoivent des modules radiofréquences RF1-RFn les mesures de puissance reçues par les antennes A1-An dans la bande utile autour de la fréquence porteuse associée au canal. Comme cela sera détaillé par la suite, la logique de commutation 3 désigne un signal RF le plus pertinent (celui provenant de l'une des antennes A1-An) et le sélectionneur 4 vient commuter sur le signal RF numérisé le plus pertinent désigné par la logique de commutation 3 pour fournir ce signal RF au module de corrélation GNSS 1.

Le récepteur GNSS comporte par ailleurs des moyens de calcul de l'attitude du porteur, par exemple une centrale inertielle 5. Chaque canal C₁-C_{N} comporte par ailleurs un calculateur de visibilité 6 configuré de manière à calculer la direction du satellite associé au canal dans le référentiel de chacune des antennes. Le calculateur de visibilité 6 exploite pour ce faire l'attitude du porteur fournie par la centrale inertielle et la direction du satellite dans le référentiel terrestre fournie par le filtre de navigation 2 ou par la centrale inertielle 5. Le calculateur de visibilité 6 en déduit les angles d'élévation et d'azimut (elᵢ,azᵢ) dans le repère de l'antenne. On relèvera que la direction du satellite dans le référentiel terrestre est classiquement obtenue à partir de la position satellite calculée par le récepteur GNSS à partir des éphémérides ou almanachs et à partir de la position du récepteur. Pour cette dernière, soit le récepteur GNSS est capable de la calculer (c'est le cas dès qu'on poursuit 4 satellites) soit cette position est fournie par la centrale inertielle.

La logique de commutation 3 sélectionne les diagrammes de rayonnement correspondant à la porteuse associée au canal (les informations relatives à ces diagrammes étant stockées dans une mémoire 7) et calcule pour chaque antenne son gain dans la direction du satellite i associé au canal Gᵢ(elᵢ,azᵢ).

On note dans ce qui suit Nᵢ les mesures de puissance fournies par les modules radiofréquence RF1-RFn et correspondant à la porteuse associée au canal. Sachant que la puissance des signaux satellites reçus est largement inférieure au bruit thermique ambiant, la puissance Nᵢ mesurée par chaque module RF est essentiellement fonction du bruit thermique de la chaîne de réception et des interférences captées par l'antenne.

La logique de commutation 3 est par ailleurs configurée de manière à calculer pour chacune des antennes un pseudo ratio signal à bruit ΔSNIR correspondant à la différence entre le gain estimé de l'antenne dans la direction du satellite Gᵢ(elᵢ,azᵢ) et la mesure de puissance reçue par l'antenne Nᵢ: ΔSNIR[dB] = Gᵢ(elᵢ,azᵢ)[dB] - Nᵢ[dBm]. Ce pseudo ratio signal à bruit est donc l'image du rapport de la puissance relative du signal estimée sur la puissance mesurée des interférences et du bruit thermique. La logique de commutation 3 compare ensuite les pseudo ratios ainsi calculés pour chacune des antennes A1-An pour ne retenir qu'une seule des antennes pour l'acquisition et la poursuite du signal satellite. La logique de commutation 3 informe le sélectionneur 4 en ce sens.

La logique de commutation 3 et le sélectionneur 4 peuvent être réalisés par logiciel (la fréquence de traitement étant largement supérieure à la fréquence de rotation du porteur).

On aura compris que l'invention apporte à la troisième solution discutée en introduction l'innovation consistant à exploiter la mesure de la puissance du signal RF reçu dans chaque bande utile (image de la puissance des interférences et du bruit thermique) et à commuter entre les antennes pour sélectionner à tout moment l'antenne permettant d'acquérir ou de poursuivre au mieux (c'est-à-dire en minimisant notamment la nuisance des brouilleurs) le signal satellite associé au canal considéré, dans la bande utile considérée.

L'ajout à la mesure d'attitude fournie par une centrale inertielle et à la mesure des gains d'antenne, d'une mesure de la puissance des signaux RF perçue par chacune des antennes du porteur permet d'exploiter au mieux et de manière simple la multiplicité des antennes pour réduire la nuisance des brouilleurs, que ce soit en phase d'acquisition des signaux satellites ou en phase de poursuite. Aucune contrainte forte n'est imposée aux positionnements et aux diagrammes des antennes (juste un recouvrement spatial).

On relèvera par ailleurs que la commutation proposée par l'invention s'effectue pour chaque canal de traitement numérique, indépendamment des autres canaux, en venant sélectionner l'antenne la plus apte à acquérir ou poursuivre le signal satellite associé au canal. Comme on le verra par la suite, suivant l'orientation du brouilleur par rapport aux satellites, l'invention permet de réduire d'un facteur un à cinq la puissance moyenne des interférences vu par les canaux de traitement, et d'améliorer ainsi la résistance au brouillage du récepteur multi-antennes.

Dans un mode de réalisation possible, la logique de commutation 3 compare le pseudo ratio signal à bruit de l'antenne à gain maximal dans la direction du satellite (antenne par défaut, sélectionnée conformément à la méthode standard uniquement en fonction du gain d'antenne) avec le pseudo ratio signal à bruit calculé pour chacun des autres antennes, dites antennes alternatives. La logique de commutation vient alors retenir une antenne alternative si le pseudo ratio signal à bruit de cette antenne alternative est supérieur au pseudo ratio signal à bruit de l'antenne à gain maximal d'une quantité prédéterminée. Dans le cas contraire, la logique de commutation conserve l'antenne par défaut. De manière préférentielle, pour éviter les commutations intempestives, notamment en l'absence de brouilleur, ladite quantité prédéterminée correspond à un seuil de décision strictement positif. Ce seuil de décision peut notamment être fonction de la précision de la mesure de puissance du signal RF et de la précision de la calibration des gains d'antenne.

Dans un mode de réalisation possible, on exclut de la comparaison des pseudo ratios signal à bruit les antennes disposant d'un gain dans la direction du satellite inférieur à un seuil prédéterminé. Autrement dit, on présélectionne les antennes dont le gain dans la direction du satellite est supérieur à un seuil prédéterminé. On vient par exemple préselectionner les antennes dont le gain dans la direction du satellite permettrait l'acquisition du signal. En considérant par exemple que l'acquisition est possible pour un rapport C/N₀ = 35 dBHz, avec une puissance nominale du signal GPS de -155 dBW sur L1 et une densité de bruit thermique de -200 dBW/Hz, le gain minimum requis serait de -10 dB : toutes les antennes dont le gain serait inférieur à cette valeur limite dans la direction donnée seraient donc exclues de la sélection pour la porteuse GPS L1.

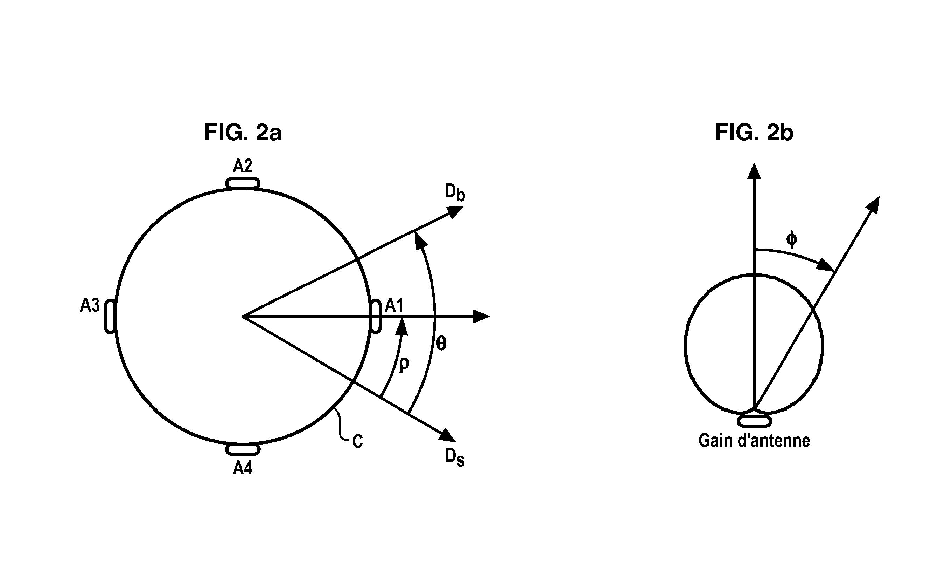

On a représenté à l'aide des figures 2a et 2b un exemple 2D de mise en oeuvre de l'invention. La figure 2a illustre un porteur sur la circonférence C duquel sont disposées quatre antennes A1-A4. Sur cette figure, θ représente l'angle entre la direction du satellite Ds et la direction de la source d'interférence Db. ρ représente l'angle de rotation du porteur, mesuré par rapport à la direction du satellite Ds. La figure 2b représente le modèle de gain d'antenne g = (1 + cos φ)², avec φ la direction mesurée par rapport au zénith de l'antenne.

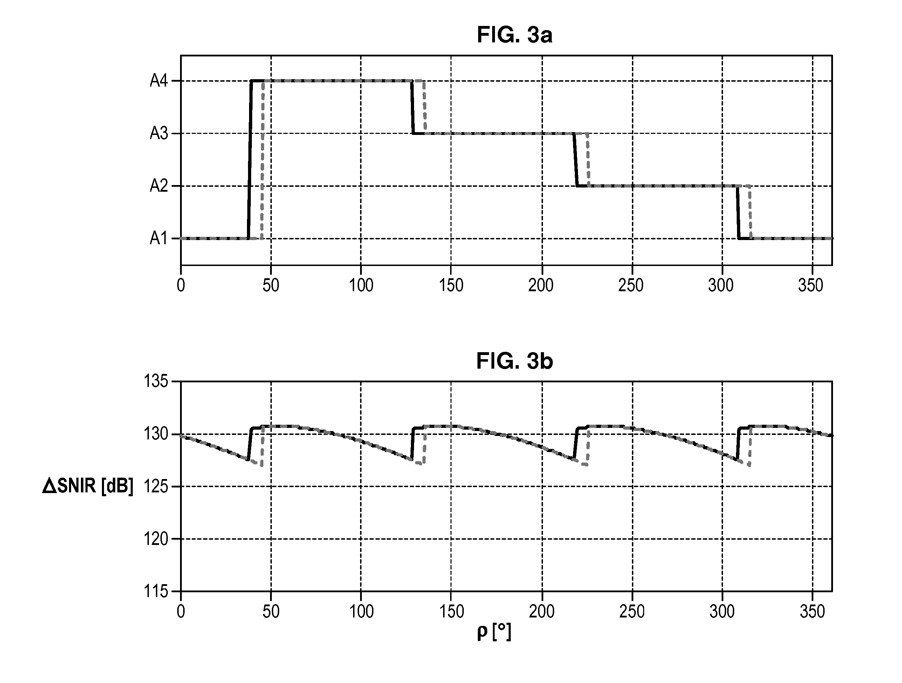

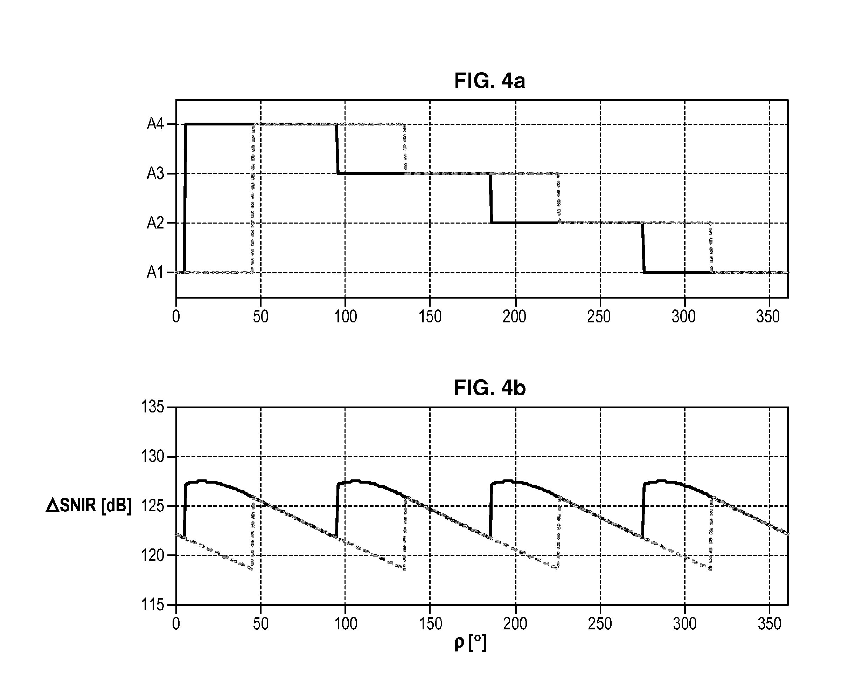

Les figures 3a-3b et 4a-4b sont des résultats de simulation fournissant une comparaison, en présence d'un brouilleur, entre le mode de sélection standard où seul le gain d'antenne dans la direction du satellite est pris en compte et le mode de sélection conforme à l'invention. Pour ces simulations, la densité de puissance du bruit thermique vu par les différentes chaînes est fixée à -200 dBW/Hz. On a par ailleurs fixé la direction du brouilleur par rapport au satellite à θ = 60°, l'angle de masquage à 5°, le seuil de décision à 3 dB, tandis que l'angle de rotation du porteur ρ varie entre 0 et 360°.

Les figures 3a et 4a illustrent quelle antenne se retrouve sélectionnée en fonction de l'angle de rotation du porteur par rapport à la direction du satellite. Les figures 3b et 3c représentent le pseudo ratio signal à bruit de l'antenne sélectionnée, toujours en fonction de l'angle de rotation du porteur. Sur ces figures, les traits pointillés illustrent le mode de sélection standard tandis que les traits pleins illustrent le mode de sélection conforme à l'invention.

Sur les figures 3a et 3b, le brouilleur est de faible puissance (J = -130 dBW, J/S ≈ 30 dB). En moyenne, le gain de pseudo ratio signal à bruit ΔSNIR avec la commutation selon l'invention est relativement négligeable (+0,2 dB). Mais à ce niveau, l'acquisition des signaux GPS P(Y) par exemple est largement accessible.

Sur les figures 4a et 4b, le brouilleur est de puissance moyenne (J = - 120 dBW, J/S ≈ 40 dB). En moyenne, le gain de ΔSNIR avec la commutation selon l'invention est de 3 dB. A ce niveau de brouillage, un gain de quelques décibels permet de réaliser l'acquisition des signaux GPS P(Y) avec une bien meilleure probabilité de réussite, par rapport à une stratégie de commutation d'antenne standard.

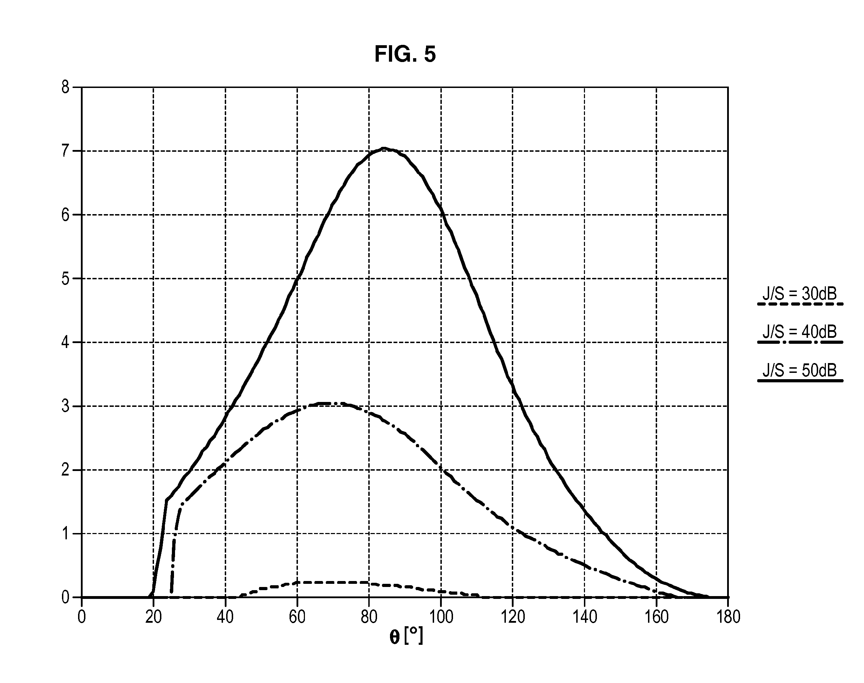

On a représenté sur la figure 5, l'amélioration moyenne (en dB) du gain ΔSNIR pour différentes puissances de brouilleur par rapport à l'approche standard en faisant varier l'orientation θ satellite - brouilleur entre 0 et 180° (le seuil considéré est toujours de 3 dB). Logiquement, lorsque le brouilleur et le satellite sont proches, il est difficile de sélectionner une antenne discriminante pour réduire l'influence du brouilleur tout en recevant le signal satellite : l'amélioration de ΔSNIR est trop faible pour justifier la commutation sur une antenne alternative. L'amélioration est en revanche notable dès lors que le brouilleur et le satellite sont dans des directions écartées l'une de l'autre, et ce d'autant plus lorsque le niveau de brouillage est important.

## Revendications

1. Procédé d'acquisition de signaux satellites dans un système de positionnement par satellites embarqué sur un porteur en rotation sur la circonférence duquel est agencé un réseau d'antennes (A1-An),
procédé dans lequel pour chaque satellite et pour chaque porteuse du signal satellite, auxquels est associé un canal de traitement numérique (C₁-C_{N}), on calcule la direction du satellite dans le repère de chacune des antennes, et on estime le gain de chacune des antennes dans la direction du satellite dans une bande utile centrée sur chaque porteuse,
procédé **caractérisé en ce que** pour chaque bande utile centrée sur une porteuse du signal satellite :
- on mesure la puissance reçue par chacune des antennes ;
- et pour chaque satellite,
○ on calcule au moyen du canal de traitement numérique (C₁-C_{N}) associé audit satellite pour chacune des antennes un pseudo ratio signal à bruit correspondant à la différence entre le gain estimé de l'antenne dans la direction du satellite et la mesure de puissance reçue par l'antenne ;
○ on compare les pseudo ratios calculés pour retenir une des antennes pour l'acquisition ou la poursuite du signal satellite par ledit canal de traitement numérique (C₁-C_{N}).

2. Procédé selon la revendication 1, dans lequel on compare le pseudo ratio signal à bruit de l'antenne à gain maximal dans la direction du satellite avec le pseudo ratio signal à bruit calculé pour chacun des autres antennes, dites antennes alternatives.

3. Procédé selon la revendication 2, dans lequel on retient une antenne alternative si le pseudo ratio signal à bruit de cette antenne alternative est supérieur au pseudo ratio signal à bruit de l'antenne à gain maximal d'une quantité prédéterminée, et dans lequel on retient l'antenne à gain maximal dans le cas contraire.

4. Procédé selon l'une des revendications précédentes, dans lequel on exclut de la comparaison des pseudo ratios signal à bruit les antennes disposant d'un gain dans la direction du satellite inférieur à un seuil prédéterminé.

5. Récepteur multi-antennes de signaux d'un système de positionnement par satellites destiné à être embarqué sur un porteur en rotation, comprenant :
- un module radio fréquence (RF1-RFn) associé à chacune des antennes (A1-An);
- un canal de traitement numérique (C₁-C_{N}) associé à chaque satellite et à chaque porteuse du signal satellite, chaque canal de traitement comportant
○ un module de corrélation (1) configuré pour assurer l'acquisition et la poursuite du signal satellite
○ des moyens de calcul (6) de la direction du satellite associé au canal dans le repère de chacune des antennes, et
○ des moyens d'estimation (7) du gain de chacune des antennes dans la direction du satellite associé au canal dans une bande utile centrée sur la porteuse du signal satellite,
**caractérisé en ce que**
- chaque module radiofréquence (RF1-RFn) est configuré pour mesurer la puissance reçue par chacune des antennes pour chaque bande utile centrée sur une porteuse du signal satellite ;
- chaque canal de traitement (C₁-C_{N}) comporte une logique de commutation (3) configurée pour :
○ calculer, pour chacune des antennes, un pseudo ratio signal à bruit correspondant à la différence entre :
■ le gain estimé de l'antenne dans la direction du satellite associé au canal de traitement et dans la bande utile centrée sur la porteuse associé au canal, et
■ la mesure de puissance reçue par l'antenne dans la bande utile centrée sur la porteuse associée au canal;
○ et comparer les pseudo ratios calculés pour retenir une des antennes pour l'acquisition ou la poursuite du signal satellite.

6. Récepteur selon la revendication précédente, dans lequel chaque canal de traitement comporte un sélectionneur (4) recevant les signaux satellites en provenance de chacun des modules radiofréquences pour la bande utile centrée la porteuse associé au canal, le sélectionneur étant commandé par la logique de commutation (3) pour fournir au module de corrélation (1) les signaux satellites captés par une seule des antennes.

7. Récepteur selon l'une des deux revendications précédentes, dans lequel la logique de commutation est configurée pour comparer le pseudo ratio signal à bruit de l'antenne à gain maximal dans la direction du satellite avec le pseudo ratio signal à bruit calculé pour chacun des autres antennes, dites antennes alternatives.

8. Récepteur selon la revendication précédente, dans lequel la logique de commutation est configurée de manière à retenir une antenne alternative si le pseudo ratio signal à bruit de cette antenne alternative est supérieure au pseudo ratio signal à bruit de l'antenne à gain maximal d'une quantité prédéterminée, et de manière à retenir l'antenne à gain maximal dans le cas contraire.

9. Récepteur selon l'une des revendications 5 à 7, dans lequel la logique de commutation est configurée pour exclure de la comparaison des pseudo ratios signal à bruit les antennes disposant d'un gain dans la direction du satellite inférieur à un seuil prédéterminé.

10. Récepteur selon l'une des revendications 5 à 8, comportant une centrale inertielle (5) fournissant la position et l'attitude du porteur aux moyens de calcul (6) de la direction du satellite dans le repère de chacune des antennes.
